# EUROPÄISCHE PATENTSCHRIFT

(11) **EP 3 137 336 B1**
(45) Veröffentlichungstag und Bekanntmachung des Hinweises auf die Patenterteilung: **31.01.2018**
(21) Anmeldenummer: 15721120.2
(22) Anmeldetag: 27.04.2015
(51) Int. Cl.: B60L 3/00, H02K 5/08

(54) **ANTRIEBSVORRICHTUNG FÜR EIN KRAFTFAHRZEUG**
DRIVE DEVICE FOR A MOTOR VEHICLE
DISPOSITIF DE PROPULSION POUR VÉHICULE AUTOMOBILE

(30) Priorität: 30.04.2014 DE 102014006190
(43) Veröffentlichungstag der Anmeldung: 08.03.2017
(73) Patentinhaber: Audi AG, 85045 Ingolstadt (DE)
(72) Erfinder: SCHMIEDER, Walter, 85120 Hepberg (DE)
(74) Vertreter: Askaryar, Jama
(86) Internationale Anmeldenummer: PCT/EP2015/000860
(87) Internationale Veröffentlichungsnummer: WO 2015/165580

(56) Entgegenhaltungen:
- EP-A2- 1 202 437
- EP-A2- 2 608 370
- WO-A2-2008/092426
- DE-A1-102009 025 348
- DE-U1- 29 709 739
- US-A- 3 622 821
- US-A- 4 320 931
- US-A1- 2002 190 581

## Beschreibung

Die vorliegende Erfindung betrifft eine Antriebsvorrichtung für ein Kraftfahrzeug gemäß dem Oberbegriff des Patentanspruchs 1.

Eine gattungsgemäße Antriebsvorrichtung weist eine Elektromaschine für ein temporär (Hybridantrieb) oder ausschließlich elektrisch angetriebenes Kraftfahrzeug auf. Die Elektromaschine ist über eine Stahlwelle mit einem in der Momentenflussrichtung nachgeschalteten Antriebsstrang gekoppelt, der in gängiger Praxis aus weiterführenden Getriebemitteln aufgebaut ist, wie zum Beispiel ein Geschwindigkeits-Wechselgetriebe, Kardan- oder Abtriebs-Gelenkwellen oder dergleichen.

Generell muss in der Fahrzeug-Bordelektronik eine elektromagnetische Verträglichkeit (EMV) gegeben sein, das heißt Komponenten der Bordelektronik dürfen sich einander nicht durch ungewollte elektrische oder elektromagnetische Effekte störend beeinflussen. Für ungewollte EMV-Störungen gibt es länderspezifische Grenzwerte, die bei der Zulassung nicht überschritten werden dürfen, um eine Beeinträchtigung der Umgebung zu vermeiden.

Die Aufgabe der Erfindung besteht darin, eine Antriebsvorrichtung bereitzustellen, die bei geringem baulichen Mehraufwand EMV-Störungen vermindern kann.

Die Aufgabe ist durch die Merkmale des Patentanspruchs 1 gelöst. Vorteilhafte Weiterbildungen und Ausgestaltungen der Erfindung sind in den Unteransprüchen offenbart.

Die Erfindung beruht auf der Erkenntnis, dass eine metallisch leitende Antriebsverbindung zwischen der Elektromaschine und dem nachgeschalteten Antriebsstrang in beträchtlichem Umfang EMV-Störungen in das Fahrzeug übertragen kann. Die Antriebsverbindung wirkt dabei wie eine Antenne, die die EMV-Störungen an die Umgebung und das Fahrzeug abgibt. Diese Störungen können den Radio-, TV- und Mobilfunkempfang im Fahrzeug und der Umgebung stören. Vor diesem Hintergrund wird gemäß dem kennzeichnenden Teil des Patentanspruches 1 zur elektromagnetischen Entkopplung der Elektromaschine vom nachgeschalteten Antriebsstrang zumindest ein Isolierelement bereitgestellt, mit dem zumindest teilweise oder abschnittsweise die Komponenten des in der Momentenflußrichtung nachgeschalteten Antriebsstranges von der Elektromaschine elektrisch isolierbar sind. Allgemein ausgedrückt können hierzu mechanische Antriebsverbindungen und/oder abtreibende Getriebemittel elektrisch isoliert ausgebildet werden. Überraschend hat sich gezeigt, dass damit die Einkopplung der elektromagnetischen Störungen wesentlich vermindert werden kann, so dass diese nicht über quasi als Antenne fungierenden Getriebemittel, zum Beispiel die Räder antreibende Gelenkwellen oder Kardanwellen, abgestrahlt werden. Länderspezifische Grenzwerte zur elektromagnetischen Verträglichkeit können dadurch leichter erfüllt werden. DE 10 2009 025 348 A1 beschreibt einen elektrischen Motor, dessen Motorwelle durch ein Kunststoffgetrieberad elektrisch vom Abtrieb entkoppelt ist. So wird verhindert, dass weitere Getriebeteile leitungsgebundene Störungen übertragen. In einer ersten, vorteilhaften Ausgestaltung der Erfindung können die Getriebemittel eine der Elektromaschine nachgeschaltete Eingangswelle eines Geschwindigkeits-Wechselgetriebes des Kraftfahrzeuges sein, die zumindest abschnittsweise elektrisch isolierend ausgebildet ist. Dies kann besonders bevorzugt ein Ankoppelteil der Eingangswelle sein, das beispielsweise über Steck- und/oder Schraubverbindungen den Rotor der Elektromaschine mittelbar oder unmittelbar mit der Eingangswelle trieblich verbindet. Das Ankoppelteil kann beispielhaft ein aus dem Drehmomentwandler herausgeführter Wellenstumpf sein.

Der elektrisch isolierende Werkstoff kann bevorzugt zur sicheren Übertragung der auftretenden Antriebsmomente ein Keramikwerkstoff, zum Beispiel eine belastungsfähige, bruchunempfindliche Sinterkeramik sein.

In einer zweiten vorteilhaften Ausgestaltung der Erfindung können Kontaktteile der Antriebsverbindungen mit Kunststoff beschichtet sein, um somit einen direkten metallischen Kontakt zu vermeiden. Kontaktteile können zum Beispiel Flansche, Schrauben, etc. sein.

In einer weiteren, alternativen Ausgestaltung der Erfindung können Bauteile der Antriebsverbindungen unmittelbar aus Kunststoff ausgeführt sein, wobei diese entsprechend den zu übertragenden Antriebsleistungen ausgelegt sein müssen, zum Beispiel mit nicht leitenden Faserverstärkungen.

In einer besonders bevorzugten Ausgestaltung der Erfindung können in die Antriebsverbindungen elektrisch isolierende Kunststoffteile integriert sein. Diese können wahlweise dann verbaut werden, wenn zur Erzielung eines Hybridantriebs eine Elektromaschine verwendet ist, während dann bei konventioneller Antriebsvorrichtung (ohne E-Maschine) diese Kunststoffteile entfallen können. Die Kunststoffteile können dabei insbesondere durch in Flanschverbindungen vorgesehene Isolierscheiben und/oder durch Isolierbüchsen gebildet sein.

Des Weiteren kann bei von der Elektromaschine angetriebenen Getriebemitteln mit einem in die abtreibende Welle einragenden Führungszapfen des Getriebemittels eine Isolierbüchse zwischen Welle und Führungszapfen eingesetzt sein, um auch hier in einfacher Weise eine Übertragung elektromagnetischer Störungen auszuschließen.

Bei einer Hybridantriebsvorrichtung mit einer Brennkraftmaschine, einer nachgeschalteten Elektromaschine und einem auf ein Geschwindigkeits-Wechselgetriebe wirkenden Getriebemittel (zum Beispiel einer Kupplung oder einem Drehmomentwandler) wird vorgeschlagen, dass zwischen dem Verbindungsflansch des Getriebemittels und dem Rotor der Elektromaschine elektrisch isolierende Kunststoffteile vorgesehen sind.

In einer vorteilhaften Weiterbildung der Erfindung können die Getriebemittel durch einen Drehmomentwandler gebildet sein, wobei die elektrisch isolierenden Kunststoffteile zwischen dem Verbindungsflansch des Wandlers mit dem Rotor der Elektromaschine und zwischen einem in die Welle des Rotors einragenden Führungszapfen des Wandlers vorgesehen sind. Damit gelingt es mit relativ einfachen, montagegünstigen Mitteln den Wandler komplett elektrisch von der Elektromaschine zu entkoppeln und somit zuverlässig EMV-Störungen zu vermindern. Alternativ kann der Wandler über das vorstehende Ankoppelteil aus Keramikwerkstoff zur GetriebeEingangswelle abtreiben.

Schließlich können in besonders zweckmäßiger Weise die Elektromaschine und das Getriebemittel in einem gemeinsamen, zwischen der Brennkraftmaschine und dem Wechselgetriebe vorgesehenem Getriebegehäuse angeordnet sein, wobei der Rotor der ringförmigen Elektromaschine radial außerhalb der Statorwicklungen positioniert und über einen insbesondere topfförmigen Abtriebsflansch mit der im Getriebegehäuse drehbar gelagerten Abtriebswelle verbunden ist und wobei ferner die elektrisch isolierte Antriebsverbindung zwischen dem Abtriebsflansch und dem Verbindungsflansch des Getriebemittels vorgesehen ist.

Die vorstehend erläuterten und/oder in den Unteransprüchen wiedergegebenen vorteilhaften Aus- und/oder Weiterbildungen der Erfindung können - außer zum Beispiel in den Fällen eindeutiger Abhängigkeiten oder unvereinbarer Alternativen - einzeln oder aber auch in beliebiger Kombination miteinander zur Anwendung kommen.

Die Erfindung und ihre vorteilhaften Aus- und Weiterbildungen sowie deren Vorteile werden nachfolgend anhand von Zeichnungen näher erläutert.

Es zeigen:
- Fig. 1: in vereinfachter Darstellung eine Hybridantriebsvorrichtung für ein Kraftfahrzeug, mit einer Brennkraftmaschine und einer achsparallel nachgeschalteten Elektromaschine, die wiederum auf einen Drehmomentwandler eines automatischen Geschwindigkeits-Wechsetgetriebes abtreibt;
- Fig. 2: als Detaildarstellung eine der Antriebsverbindungen zwischen dem Abtriebsflansch der Elektromaschine und dem Verbindungsflansch des Wandlers;
- Fig. 3: die elektrische isolierte Aufnahme des Führungszapfens des Wandlers innerhalb der Abtriebswelle der Elektromaschine; und
- Fig. 4: abschnittsweise die Hybridantriebsvorrichtung gemäß Fig. 1 mit einem zwischen dem abtreibenden Wandler und der Getriebe-Eingangswelle angeordneten Ankoppelteil aus einem Keramikwerkstoff.

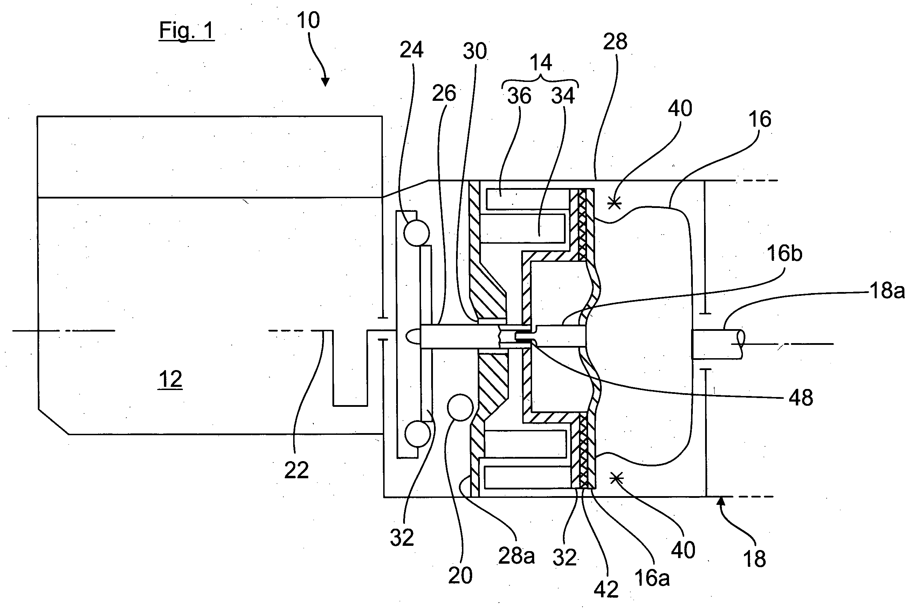

Die Fig. 1 zeigt skizzenhaft eine Hybridantriebsvorrichtung 10 zum Beispiel für ein allradgetriebenes Kraftfahrzeug, mit einer Brennkraftmaschine 12 und einer im Kraftfluss nachgeschalteten Elektromaschine 14, die über einen nur in Umrissen dargestellten Drehmomentwandler 16 auf ein automatisches Geschwindigkeits-Wechselgetriebe 18 bekannter Bauart (nicht dargestellt) abtreibt. Über das Wechselgetriebe 18 werden über eine Kardanwelle und ein hinteres Achsdifferenzial die Hinterräder und über ein vorderes Achsdifferenzial und quer verlaufende Differenzial-Halbwellen 20 die Vorderräder des Kraftfahrzeugs in bekannter Weise angetrieben.

Die Kurbelwelle 22 (nur angedeutet) der Brennkraftmaschine 12 ist über einen Drehschwingungsdämpfer 24 trieblich mit einer Abtriebswelle 26 verbunden, die in einer Zwischenwand 28a eines umgebenden Getriebegehäuses 28 über Wälzlager 30 drehbar gelagert ist.

Die Abtriebswelle 26 ist mit einem topfförmigen Abtriebsflansch 32 verbunden, der radial außerhalb der ringförmigen Statorwicklungen 34 den ringförmigen Rotor 36 der Elektromaschine 14 trägt. Die Elektromaschine 14 kann in bekannter Weise als Generator oder als Antriebsmotor geschaltet werden.

An den Abtriebsflansch 32 der Elektromaschine 14 ist der Wandler 16 angekoppelt, der über eine Steckverbindung (nicht dargestellt) mit der Eingangswelle 18a des Wechselgetriebes 18 trieblich verbunden ist.

Der Wandler 16 weist an seiner dem Abtriebsflansch 32 zugewandten Stirnseite einen Verbindungsflansch 16a (auch als flex plate bekannt) und einen in die Abtriebswelle 26 einragenden und in dieser radial geführten Führungszapfen 16b auf.

Der Verbindungsflansch 16a des Wandlers 16 ist dabei über mehrere, radial außenliegende und umfangsverteilte Schraubverbindungen 40 (in Fig. 1 durch strichpunktierte Linien 40 angedeutet) mit dem Abtriebsflansch 32 fest verbunden.

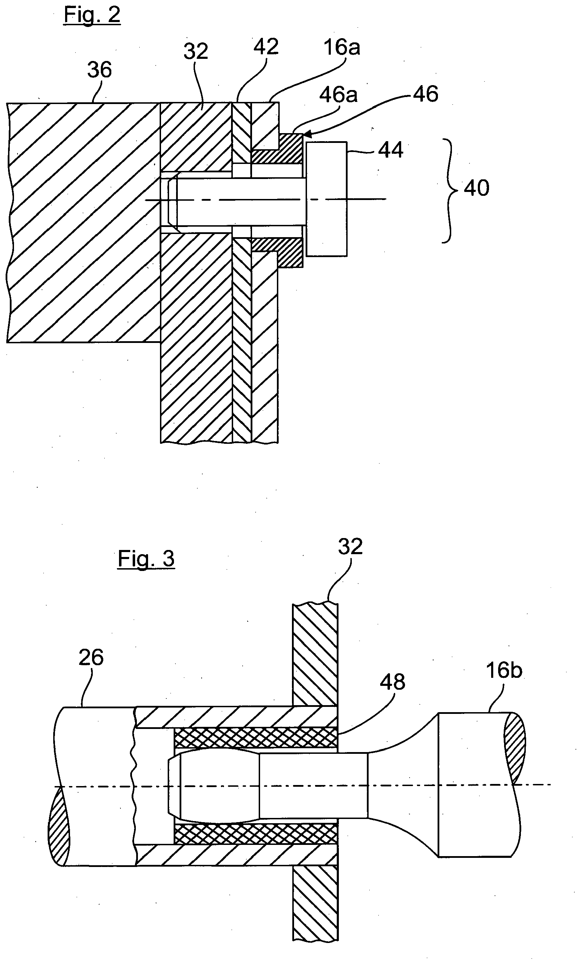

Zur elektrischen (galvanischen) Isolierung des Verbindungsflansches 16a (Fig. 2) relativ zum Abtriebsflansch 32 des Rotors 36 bzw. der in das Getriebegehäuse 14 integrierten Elektromaschine 14 ist zwischen dem Abtriebsflansch 32 und der korrespondierenden Kontaktfläche des Verbindungsflansches 16a eine ringförmige Isolierscheibe 42 aus zähhartem Kunststoff eingelegt, deren Lochmuster der Anordnung der Schraubverbindungen 40 entspricht.

Die von der Seite des Wandlers 16 in entsprechende Gewindebohrungen des Abtriebsflansches 32 eingeschraubten Schrauben 44 durchdringen dabei in korrespondierenden Bohrungen des Verbindungsflansches 16a eingesetzte Isolierbüchsen 46 aus Kunststoff.

Die Isolierbüchsen 46 ebenfalls aus zähhartem Kunststoff sind jeweils mit einem Bund 46a versehen, der die zugewandte Stirnfläche der Schrauben 44 überdeckt. Demzufolge besteht weder im Bereich der Schraubverbindungen 40 noch im übrigen Kontaktbereich zwischen dem Abtriebsflansch 32 und dem Verbindungsflansch 16a eine metallische bzw. elektrisch leitende Verbindung.

Zudem ist der Führungszapfen 16b des Wandlers 16 (Fig. 3) in einer in die Abtriebswelle 26 eingesetzten Isolierbüchse 48 aus Kunststoff geführt, also ebenfalls elektrisch isoliert.

Durch die beschriebenen Maßnahmen gemäß den Fig. 2 und 3 ist die Elektromaschine 14 gegenüber dem Getriebemittel bzw. Drehmomentwandler 16 vollständig elektrisch isoliert, so dass gegebenenfalls von der Elektromaschine 14 ausgehende elektromagnetische Störungen im Getriebegehäuse 28 eingeschlossen bzw. weitgehendst über die Antriebsverbindungen 40, 16b vermieden sind.

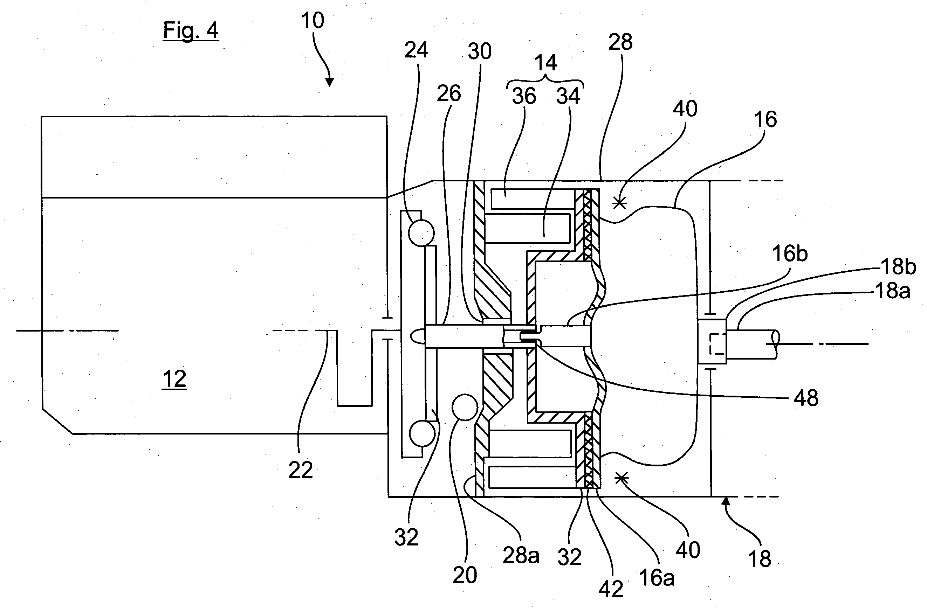

Die Fig. 4 zeigt eine weiteres Ausführungsbeispiel der Antriebsvorrichtung 10, bei dem im Kraftfluss nach dem Wandler 16 zusätzlich oder alternativ zu den vorstehend ausgeführten Isoliermitteln ein büchsenförmiges Ankoppelteil 18b aus einem elektrisch isolierendem Material, bevorzugt aus einem Keramikwerkstoff (zum Beispiel einer Sinterkeramik) vorgesehen ist.

Das Ankoppelteil 18b kann in nicht dargestellter Weise über Steckverbindungen mit dem Abtriebselement des Wandlers 16 und/oder der Eingangswelle 18a des Wechselgetriebes 18 trieblich verbunden sein.

Über das Ankoppelteil 18b werden wie vorstehend von der Elektromaschine 28 ausgehende Interferenzen bzw. EMV-Störungen zumindest unterdrückt. Gegebenenfalls könnte aber auch die Eingangswelle 18a des Wechselgetriebes 18 direkt zumindest teilweise aus einem elektrisch isolierendem Keramikwerkstoff gefertigt sein.

Die Erfindung ist nicht auf die beschriebenen Ausführungsbeispiele beschränkt.

Anstelle der integrierten Kunststoffteile 42, 46 und 48 können auch entsprechend isolierend beschichtete, metallische Bauteile, zum Beispiel der Abtriebsflansch 32 und/oder der Verbindungsflansch 16a, eingesetzt sein.

Gegebenenfalls könnte der Abtriebsflansch 32 oder der Verbindungsflansch 16a unmittelbar aus Kunststoff (zum Beispiel aus faserverstärktem Kunststoff) gefertigt sein, um somit die beschriebene Isolierung herzustellen.

Anstelle des Drehmomentwandlers 16 könnten auch andere Getriebemittel, zum Beispiel eine Trennkupplung in der Antriebsvorrichtung vorgesehen sein, die entsprechend elektrisch isoliert an die Elektromaschine 14 angekoppelt wäre.

Schließlich könnte auch eine Antriebsvorrichtung mit ausschließlich einer auf die Getriebemittel abtreibenden Elektromaschine 14 und elektrisch isolierenden Antriebsverbindungen wie vorbeschrieben vorgesehen sein.

## Patentansprüche

1. Antriebsvorrichtung für ein Kraftfahrzeug mit einer antreibenden Elektromaschine (14), deren Abtriebsseite (36), insbesondere der Rotor der Elektromaschine, in trieblicher Verbindung mit einem zu angetriebenen Räder des Kraftfahrzeugs führenden Antriebsstrang ist, wobei zur Reduktion von EMV-Störungen und zur elektromagnetischen Entkopplung der Elektromaschine (14) vom Antriebsstrang zumindest ein Isolierelement (42, 46, 48) bereitgestellt ist, mit dem zumindest abschnittsweise die Komponenten (16) des nachgeschalteten Antriebsstranges von der Elektromaschine (14) elektrisch isoliert sind, wobei das Isolierelement als eine Beschichtung ausgeführt ist, die an zumindest einer der einander zugewandten Kontaktflächen der Elektromaschinen-Abtriebsseite (32) und der Antriebsstrang-Eingangsseite (16a) aufgebracht ist, oder dass die Abtriebsseite (32) und/oder die Eingangsseite (16a) vollständig aus elektrisch isolierendem Werkstoff gefertigt sind, und/oder dass das Isolierelement (42, 48) als ein separates Bauteil zwischen der Elektromaschinen-Antriebsseite (32) und der Antriebsstrang-Eingangsseite (16a) angeordnet ist, und wobei die Antriebsvorrichtung zusätzlich eine Brennkraftmaschine (12) aufweist, die über eine Abtriebswelle (26) mit dem Abtriebsflansch (32) der Elektromaschine (14) momentenübertragend verbunden ist, und dass der Verbindungsflansch einen koaxial zur Abtriebswelle (26) angeordneten Führungszapfen (16b) aufweist, der in einer stirnseitigen Lagerbohrung der Abtriebswelle elekrisch isoliert drehgelagert ist.

2. Antriebsvorrichtung nach Anspruch 1, **dadurch gekennzeichnet, dass** das Isolierelement (42, 48) unmittelbar zwischen der Abtriebsseite (36) der Elektromaschine (14) und einer Eingangsseite (16a) des Antriebsstrangs angeordnet ist.

3. Antriebsvorrichtung nach einem der vorhergehenden Ansprüche, **dadurch gekennzeichnet, dass** das Isolierelement aus einem elektrisch isolierenden Werkstoff hergestellt ist.

4. Antriebsvorrichtung nach einem der vorhergehenden Ansprüche, **dadurch gekennzeichnet, dass** die elektromaschinenseitige Abtriebsseite (32) ein Abtriebsflansch ist, der mit einem, die Antriebsstrang-Eingangsseite bildenden Verbindungsflansch (16a) zu einer Flanschverbindung zusammengefügt ist, und dass das Isolierelement (42) eine Isolierscheibe ist, die zwischen den beiden Flanschen (32, 16a) angeordnet ist.

5. Antriebsvorrichtung nach Anspruch 4, **dadurch gekennzeichnet, dass** beide Flansche (32, 16a) an zumindest einer Anschraubstelle (40) miteinander verschraubt sind, bei der ein, eine Schrauböffnung des einen Flansches (16a) durchsetzender Schraubbolzen (44) mit dem anderen Flansch (32) verspannt ist, und dass das Isolierelement (46) als eine Isolierbuchse ausgeführt ist, die in die Schrauböffnung des Flansches (32) eingesetzt ist und durch die der Schraubbolzen (44) geführt ist, und dass die Isolierbuchse (46) einen den Öffnungsrand der Schrauböffnung übergreifenden Ringbund (46a) aufweist, der zwischen einen Schraubbolzen-Kopf und dem Flansch (32) eingespannt ist.

6. Antriebsvorrichtung nach Anspruch 5, **dadurch gekennzeichnet, dass** die Isolierscheibe (42) eine Durchgangsöffnung aufweist, durch die der Schraubbolzen (44) geführt ist.

7. Antriebsvorrichtung nach einem der Ansprüche 4 oder 5, **dadurch gekennzeichnet, dass** der Verbindungsflansch (16a) Bestandteil eines getriebeseitigen Drehmomentwandlers (16) ist, und dass der Drehmomentwandler (16) ausgangsseitig ein Ankoppelteil (18b) aufweist zur Ankopplung einer Getriebeeingangswelle (18a) eines Geschwindigkeits-Wechselgetriebes (18), und dass zur elektromagnetischen Entkopplung das Ankoppelteil (18b) als Isolierelement ausgeführt ist.

8. Antriebsvorrichtung nach einem der vorhergehenden Ansprüche, **dadurch gekennzeichnet, dass** das Isolierelement (48) eine Lagerbuchse ist, die in die stirnseitige Lagerbohrung der Abtriebswelle (26) eingesetzt ist und in der der Führungszapfen (16b) drehgelagert ist.

9. Antriebsvorrichtung nach Anspruch 7, **dadurch gekennzeichnet, dass** die Elektromaschine (14) und der Drehmomentwandler (16) in einem gemeinsamen, zwischen der Brennkraftmaschine (12) und dem Wechselgetriebe (18) vorgesehenen Getriebegehäuse (28) angeordnet sind, und/oder dass der Rotor (36) der ringförmigen Elektromaschine (14) radial außerhalb der Statorwicklungen (34) positioniert und/oder über einen topfförmigen Abtriebsflansch (32) mit der im Getriebegehäuse (28) drehbar gelagerten Abtriebswelle (26) verbunden ist.

## Claims

1. Drive device for a motor vehicle with a driving electric machine (14), whose output side (36), in particular the rotor of the electric machine, is in operational connection with a drive rod leading to driven wheels of the motor vehicle, wherein in order to reduce EMV errors and to electromagnetically decouple the electric machine (14) from the drive rod, at least one insulating element (42, 46, 48) is provided with which the components (16) of the downstream drive rod are electrically insulated from the electric machine (14), wherein the insulating element is designed as a coating which is applied on at least one of the contact surfaces of the electric machine output side (32) facing each other and the drive rod input side (16a) or in that the output side (32) and/or the input side (16a) are fully made from an electrically insulating material and/or in that the insulating element (42, 48) is arranged as a separate component between the electric machine drive side (32) and the drive rod input side (16a) and wherein the drive device also has an internal combustion engine (12) which is connected in a torque-transmitting manner to the output flange (32) of the electric machine (14) via an output shaft (26) and in that the connection flange has a guide pin (16b) arranged coaxially to the output shaft (26) which is rotatably mounted in an electrically insulating manner in an end-face bearing borehole of the output shaft.

2. Drive device according to claim 1, **characterised in that** the insulating element (42, 48) is arranged directly between the output side (36) of the electric machine (14) and an input side (16a) of the drive rod.

3. Drive device according to any one of the preceding claims, **characterised in that** the insulating element is made from an electrically-insulating material.

4. Drive device according to any one of the preceding claims, **characterised in that** the electric machine-side output side (32) is an output flange which is joined to a flange connection with a connection flange (16a) forming the drive rod input side and **in that** the insulating element (42) is an insulating disc which is arranged between the two flanges (32, 16a).

5. Drive device according to claim 4, **characterised in that** both flanges (32, 16a) are screwed with each other at at least one screwing point (40), in which a threaded bolt (44) pushing through a screw opening of one flange (16a) is tightened with the other flange (32) and **in that** the insulating element (46) is designed as an insulating bushing which is inserted into the screw opening of the flange (32) and through which the threaded bolt (44) is guided and **in that** the insulating bushing (46) has a coil (46a) overlapping the opening edge of the screw opening, said coil is clamped between a threaded bolt head and the flange (32).

6. Drive device according to claim 5, **characterised in that** the insulating disc (42) has a through opening through which the threaded bolt (44) is guided.

7. Drive device according to any one of claims 4 or 5, **characterised in that** the connection flange (16a) is part of a gearbox-side torque converter (16) and **in that** the torque converter (16) has a coupling part (18b) on the output side to couple a gearbox input shaft (18a) of a speed change gearbox (18) and **in that** the coupling part (18b) is designed as an insulating element for electromagnetic decoupling.

8. Drive device according to any one of the preceding claims, **characterised in that** the insulating element (48) is a bearing bushing which is inserted into the end face bearing borehole of the output shaft (26) and in which the guide pin (16b) is rotatably mounted.

9. Drive device according to claim 7, **characterised in that** the electric machine (14) and the torque converter (16) are arranged in a common gearbox housing (28) provided between the internal combustion engine (12) and the change speed gearbox (18) and/or in that the rotor (36) of the ring-shaped electric machine (14) is positioned radially outside of the stator windings (34) and/or **in that** it is connected via a pot-shaped output flange (32) with the output shaft (26) rotatably mounted in the gearbox housing (28).

## Revendications

1. Dispositif de propulsion pour un véhicule automobile avec une machine électrique (14) motrice dont le côté de sortie (36), en particulier le rotor de la machine électrique, est en liaison motrice avec une chaîne cinématique conduisant à des roues entraînées du véhicule automobile,
dans lequel, dans le but d'une réduction des perturbations électromagnétiques et d'un découplage électromagnétique entre la machine électrique (14) et la chaîne cinématique, il est prévu au moins un élément isolant (42, 46, 48) avec lequel les composants (16) de la chaîne cinématique placée en aval sont au moins en partie isolés électriquement de la machine électrique (14),
dans lequel l'élément isolant est réalisé comme un revêtement qui est appliqué sur au moins l'une des surfaces de contact, tournées l'une vers l'autre, du côté de sortie (32) de la machine électrique et du côté d'entrée (16a) de la chaîne cinématique,
ou en ce que le côté de sortie (32) et/ou le côté d'entrée (16a) sont entièrement fabriqués en un matériau électriquement isolant,
et/ou en ce que l'élément isolant (42, 48) est agencé en tant que pièce séparée entre le côté de sortie (32) de la machine électrique et le côté d'entrée (16a) de la chaîne cinématique,
et dans lequel le dispositif de propulsion comporte en plus un moteur à combustion interne (12) qui est relié par l'intermédiaire d'un arbre de sortie (26) avec la bride de sortie (32) de la machine électrique (14) de manière à transmettre le couple,
et en ce que la bride de liaison comporte un tenon de guidage (16b) qui est agencé de manière coaxiale par rapport à l'arbre de sortie (26) et qui est logé rotatif et électriquement isolant dans un alésage de palier frontal de l'arbre de sortie.

2. Dispositif de propulsion selon la revendication 1, **caractérisé en ce que** l'élément isolant (42, 48) est agencé directement entre le côté de sortie (36) de la machine électrique (14) et le côté d'entrée (16a) de la chaîne cinématique.

3. Dispositif de propulsion selon l'une quelconque des revendications précédentes, **caractérisé en ce que** l'élément isolant est fabriqué en un matériau électriquement isolant.

4. Dispositif de propulsion selon l'une quelconque des revendications précédentes, **caractérisé en ce que** le côté de sortie (32) de la machine électrique est une bride de sortie qui est assemblée à une bride de liaison (16a) formant le côté d'entrée de la chaîne cinématique afin de constituer une liaison à brides et **en ce que** l'élément isolant (42) est un disque isolant qui est agencé entre les deux brides (32, 16a).

5. Dispositif de propulsion selon la revendication 4, **caractérisé en ce que** les deux brides (32, 16a) sont vissées ensemble au niveau d'au moins un point de vissage (40), au niveau duquel un boulon fileté (44) traversant une ouverture filetée d'une bride (16a) est serré avec l'autre bride (32), et **en ce que** l'élément isolant (46) est réalisé comme un manchon isolant qui est placé dans l'ouverture filetée de la bride (32) et à travers lequel le boulon fileté (44) est guidé, et **en ce que** le manchon isolant (46) comporte un collet annulaire (46a) qui passe par-dessus le bord d'ouverture de l'ouverture filetée et qui est serré entre une tête de boulon fileté et la bride (32).

6. Dispositif de propulsion selon la revendication 5, **caractérisé en ce que** le disque isolant (42) comporte une ouverture de passage à travers laquelle le boulon fileté (44) est guidé.

7. Dispositif de propulsion selon l'une quelconque des revendications 4 ou 5, **caractérisé en ce que** la bride de liaison (16a) fait partie d'un convertisseur de couple (16) côté transmission, et **en ce que** le convertisseur de couple (16) comporte en sortie une partie de couplage (18b) destinée au couplage d'un arbre d'entrée de transmission (18a) d'une boîte de vitesses (18), et **en ce que** la pièce de couplage (18b) est réalisée en tant qu'élément isolant en vue du découplage électromagnétique.

8. Dispositif de propulsion selon l'une quelconque des revendications précédentes, **caractérisé en ce que** l'élément isolant (48) est un coussinet de palier qui est placé dans l'alésage de palier frontal de l'arbre de sortie (26) et dans lequel le tenon de guidage (16b) est logé rotatif.

9. Dispositif de propulsion selon la revendication 7, **caractérisé en ce que** la machine électrique (14) et le convertisseur de couple (16) sont agencés dans un carter de boîte (28) commun prévu entre le moteur à combustion interne (12) et la boîte de vitesses (18), et/ou **en ce que** le rotor (36) de la machine électrique (14) annulaire est placé de façon radiale à l'extérieur des enroulements de stator (34) et/ou est relié par l'intermédiaire d'une bride de sortie (32) en forme de cloche à l'arbre de sortie (26) logé rotatif dans le carter de boîte (28).
